# EUROPEAN PATENT APPLICATION

(11) **EP 3 006 266 A2**
(43) Date of publication of application: **13.04.2016**
(21) Application number: 15173547.9
(22) Date of filing: 24.06.2015
(51) Int. Cl.: B60Q 3/02

(54) **MOOD LIGHT DEVICE OF VEHICLE**

(30) Priority: 10.10.2014 KR 20140136814
(71) Applicant: Hanil E-Hwa Co., Ltd., Seoul 135-750 (KR)
(72) Inventor: Kim, Ki Ho, 336-050 Chungcheongnam-do (KR)
(74) Representative: Zinkler, Franz

(57) **Abstract**

Disclosed herein is a mood light device of a vehicle indirectly lighting an interior space of the vehicle includes: a first object (10) configured to include a reflecting surface (11) which reflects light incident from an opposing surface (21) of a second object (20) to a light space inside the vehicle; a second object configured to include an opposing surface which reflects light irradiated from a light source (30) to the reflecting surface of the first object; and a light source configured to be installed at the first object and irradiate the light from the first object to the opposing surface of the second object, thereby implementing an indirect light effect by using a space of an opposing object even in the case of the object which may hardly secure a space in which a light source is installed.

## Description

### CROSS-REFERENCE TO RELATED APPLICATION

This application claims priority to Korean Patent Application No. 10-2014-0136814, filed on October 10, 2014, the disclosure of which is incorporated herein by reference in its entirety.

### BACKGROUND OF THE INVENTION

### Field of the Invention

Exemplary embodiments of the present invention relate to a mood light device of a vehicle, and more particularly, to a mood light device of a vehicle capable of implementing an indirect light effect inside the vehicle.

### Description of the Related Art

Generally, various light fixtures are installed in a cluster, a crash pad, a door trim, etc., inside a vehicle to enhance discrimination of a driver at night and interior lighting.

For example, a front of a driver seat of a vehicle is provided with the cluster for providing driving information of a vehicle and an engine to the driver by a method of displaying the driving information as characters or figures, in which the cluster includes a character board on which a gradation, characters, and a pointer are formed and is provided with the light fixture for discriminating these marks. In the case of the cluster, indirect lighting is implemented between a dial and a window to prevent glazing due to direct lighting.

Further, in the case of a speaker mood lamp which is installed at a vehicle door, a means for smoothly lighting an interior of a vehicle is installed. As such, various fixtures are installed inside the vehicle to implement the indirect lighting rather than implementing the direct lighting.

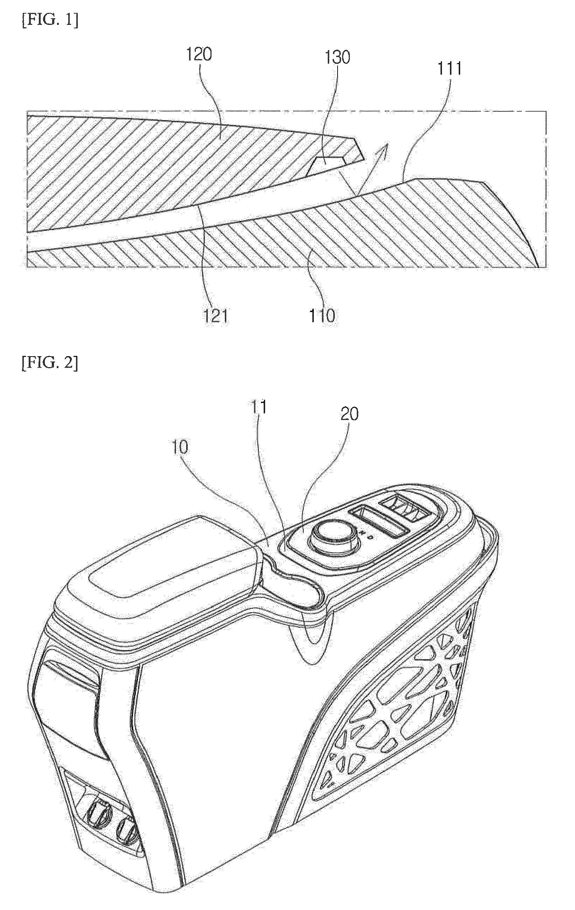

Referring to FIG. 1, the existing mood light device of a vehicle includes a first object 110 including a reflecting surface 111 which reflects light irradiated from a light source 130 to a light space inside the vehicle, a second object 120 including an opposite surface 121 which faces the reflecting surface 111 of the first object 110, and the light source 130 which is included in the second object 120.

According to the related art, the light source 130 is installed at the second object 120, and thus the light output from the light source 130 is reflected to the reflecting surface 111 of the first object 110 and is then immediately output to the light space.

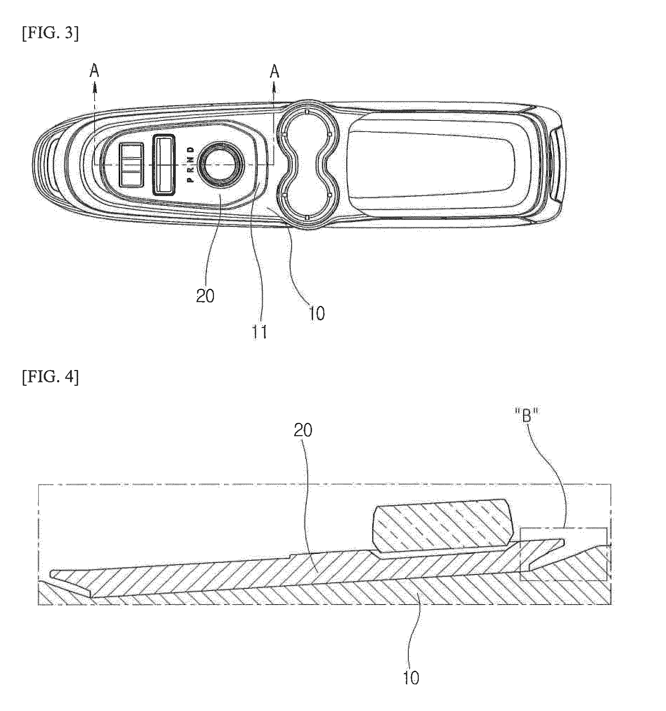

However, it is difficult to implement the indirect light effect when the second object 120 may not sufficiently secure the space in which the light source 130 is installed. For example, as illustrated in FIG. 3, when another part 2 is installed in the second object 20 and thus the space in which the light source is installed is hardly secured, the indirect light effect may not be implemented.

### SUMMARY OF THE INVENTION

An object of the present invention is to provide a mood light device of a vehicle capable of implementing an indirect light effect by using a space of an opposing object even in the case of an object which may hardly secure a space in which a light source is installed.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a mood light device of a vehicle indirectly lighting an interior space of the vehicle includes: a first object configured to include a reflecting surface which reflects light incident from an opposing surface of a second object to a light space inside the vehicle; a second object configured to include an opposing surface which reflects light irradiated from a light source to the reflecting surface of the first object; and a light source configured to be installed at the first object and irradiate the light from the first object to the opposing surface of the second object.

The reflecting surface of the first object may be provided to be toward the light space inside the vehicle, and the opposing surface of the second object may be provided to face the reflecting surface.

The opposing surface of the second object may be formed in a curved surface.

The opposing surface of the second object may have a curvature center of the curved surface positioned at the first object.

The reflecting surface of the first object may be formed in a curved surface.

The reflecting surface of the first object may have a curvature center of the curved surface positioned at the second object.

The reflecting surface of the first object may be formed to protrude more outward than the opposing surface of the second object.

Various features and advantages of the present invention will be more obvious from the following description with reference to the accompanying drawings.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a concept diagram illustrating the mood light device of a vehicle according to the related art;
FIG. 2 is a perspective view illustrating a console to which a mood light device of a vehicle according to an exemplary embodiment of the present invention is applied;
FIG. 3 is a plan view of FIG. 2;
FIG. 4 is a schematic side cross-sectional view taken along the line A-A of FIG. 3; and
FIG. 5 is an enlarged view of part "B" of FIG. 4.

### DESCRIPTION OF SPECIFIC EMBODIMENTS

Hereinafter, exemplary embodiments of the present will be described in detail with reference to the accompanying drawings.

Referring to FIGS. 2 to 5, a mood light device of a vehicle according to an exemplary embodiment of the present invention includes a first object 10 including a reflecting surface 11 which reflects light incident from an opposing surface 21 of a second object 20 to a light space 1 inside the vehicle, the second object 20 including an opposite surface 21 which reflects light irradiated from a light source 30 to the reflecting 11 of the first object 10, and the light source 30 which irradiates the light from the first object 10 to the opposite surface 21 of the second object 20.

As illustrated in FIG. 2, according to the exemplary embodiment of the present invention, the first object 10 is a console body and the second object 20 is an upper panel which is provided on an upper surface of the console body. The upper panel is provided with various receiving spaces, an operating part, etc.

The reflecting surface 11 of the first object is provided to be toward the light space 1 inside the vehicle and the opposing surface 21 of the second object 20 is provided to face the reflecting surface 11. According to the exemplary embodiment of the present invention, the console body is installed at a floor of the vehicle and therefore the reflecting surface 11 of the first object 10 is installed to be toward a ceiling inside the vehicle.

The reflecting surface 11 of the first object 10 is provided to protrude more outward than the opposing surface 21 of the second object 20. As a result, the light reflected from the reflecting surface 11 of the first object 10 may be irradiated to the light space 1 inside the vehicle without being covered with the second object 20.

The light source 30 is installed at the first object 10 and is covered with the second object 20 to be positioned at the farthest place from opened tips of the first object 10 and the second object 20 so as to prevent light from being directly exposed to the light space 1 inside the vehicle.

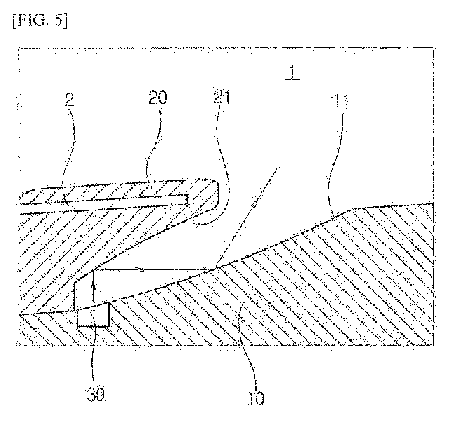

As illustrated in FIG. 5, the light source 30 is installed at the first object 10 and thus the light output from the light source 30 is irradiated to the opposing surface 21 of the second object 20.

The reflecting surface 11 of the first object 10 and the opposing surface 21 of the second object 20 are each formed in a curved surface. A curvature center of the reflecting surface 11 of the first object 10 is positioned at the second object 20 and a curvature center of the opposing surface 21 of the second object 20 is positioned at the first object 10. In other words, the reflecting surface 11 of the first object 10 has a curved surface depressed toward a lower portion of the console body, while the opposing surface 21 of the second object 20 has a curved surface depressed upward. That is, the opposing surface 21 is provided to be depressed toward an opposite side to the reflecting surface 11.

Therefore, the opposing surface 21 reflects the light irradiated from the light source 30 to the reflecting surface 11 of the first object 10. The reflecting surface 11 again reflects the light reflected from the opposing surface 21 to the light space 1.

As illustrated in FIG. 1, when the opposing surface 121 is formed to be depressed toward the same side as the reflecting surface 111, if the curvature center of the opposing surface 121 and the curvature center of the reflecting surface 111 both are positioned at the second object 120, an incident angle and a reflecting angle of the opposing surface 121 are increased and thus the light reflected from the opposite surface 121 does not pass through the reflecting surface 111 but is directly propagated to the light space, thereby reducing an indirect light effect.

On the other hand, according to the exemplary embodiment of the present invention, the light source 30 is installed at the first object 10 and the light from the light source 30 is reflected to the reflecting surface 11 of the first object 10 by the opposing surface 21 of the second object 20 and is then reflected from the reflecting surface 11 of the first object 10 again to be propagated to the light space 1.

As such, even though the light source 30 is not installed at the second object 20 but is installed at the first object 10, the indirect lighting may be implemented by the reflection action of the opposing surface 21. Therefore, when the second object 20 may not sufficiently secure the space in which the light source 30 is installed, the light source 30 may be installed at the first object 10. For example, when another part 2 is installed at the second object 20 and thus it is difficult to secure the space in which the light source 30 is installed, the light source 30 is installed at the first object 10, thereby implementing the indirect light effect.

Meanwhile, even when the opposing surface 21 is formed in a plane, the incident angle and the reflecting angle are larger than the curved surface and thus an angle at which light is reflected to the reflecting surface 11 is changed but the indirect light effect may be implemented depending on the curvature of the reflecting surface 11, the protrusion toward the light space 1 with respect to the opposing surface 21, etc. Therefore, the case in which the opposing surface 21 is formed in a plane may be included in the scope of the present invention. In this case, to make the incident angle and the reflecting angle of the opposing surface 21 small, the irradiating angle of the light source 30 may be changed.

As described above, according to the mood light device of a vehicle according to the exemplary embodiments of the present invention, it is possible to implement the indirect light effect by installing the light source in the opposing object even when it is difficult to secure the space in which the light source is installed and facilitating the reflection action.

Although the preferred embodiments of the present invention have been disclosed for illustrative purposes, they are for specifically explaining the present invention. Therefore, the preferred embodiments of the present invention is not limited thereto, but those skilled in the art will appreciate that various modifications and alteration are possible, without departing from the scope and spirit of the invention as disclosed in the accompanying claims.

Accordingly, any and all modifications, variations or equivalent arrangements should be considered to be within the scope of the invention, and the detailed scope of the invention will be disclosed by the accompanying claims.

## Claims

1. A mood light device of a vehicle indirectly lighting an interior space of the vehicle, comprising:
a first object configured to include a reflecting surface which reflects light incident from an opposing surface of a second object to a light space inside the vehicle;
a second object configured to include an opposing surface which reflects light irradiated from a light source to the reflecting surface of the first object; and
a light source configured to be installed at the first object and irradiate the light from the first object to the opposing surface of the second object.

2. The mood light device of a vehicle of claim 1, wherein the reflecting surface of the first object is provided to be toward the light space inside the vehicle, and
the opposing surface of the second object is provided to face the reflecting surface.

3. The mood light device of a vehicle of claim 2, wherein the opposing surface of the second object is formed in a curved surface.

4. The mood light device of a vehicle of claim 3, wherein the opposing surface of the second object has a curvature center of the curved surface positioned at the first object.

5. The mood light device of a vehicle of claim 2, wherein the reflecting surface of the first object is formed in a curved surface.

6. The mood light device of a vehicle of claim 5, wherein the reflecting surface of the first object has a curvature center of the curved surface positioned at the second object.

7. The mood light device of a vehicle of claim 2, wherein the reflecting surface of the first object is formed to protrude more outward than the opposing surface of the second object.
